# EUROPÄISCHE PATENTSCHRIFT

(11) **EP 1 504 066 B1**
(45) Veröffentlichungstag und Bekanntmachung des Hinweises auf die Patenterteilung: **19.03.2008**
(21) Anmeldenummer: 03727446.1
(22) Anmeldetag: 07.05.2003
(51) Int. Cl.: C09D 7/00

(54) **BESCHICHTUNGEN, VERFAHREN ZU IHRER HERSTELLUNG UND IHRE VERWENDUNG**
COATINGS, METHODS FOR PRODUCING THE SAME, AND THE USE THEREOF
REVETEMENTS, PROCEDES DE REALISATION ET UTILISATION ASSOCIES

(30) Priorität: 11.05.2002 DE 10221009
(43) Veröffentlichungstag der Anmeldung: 09.02.2005
(73) Patentinhaber: BASF Coatings AG, 48165 Münster (DE)
(72) Erfinder: NIEMEIER, Manuela, 48317 Drensteinfürt (DE); POPPE, Andreas, 48153 Münster (DE); STÜBBE, Wilfried, 48268 Greven (DE); WESTHOFF, Elke, 48565 Steinfurt (DE)
(74) Vertreter: Leifert & Steffan
(86) Internationale Anmeldenummer: PCT/EP2003/004767
(87) Internationale Veröffentlichungsnummer: WO 2003/095567

(56) Entgegenhaltungen:
- WO-A-03/016411
- DE-A- 19 920 801
- US-A1- 2003 125 460

## Beschreibung

### Gebiet der Erfindung

Die vorliegende Erfindung betrifft neue Beschichtungen. Außerdem betrifft die vorliegende Erfindung ein Verfahren zur Herstellung von Beschichtungen. Des weiteren betrifft die vorliegende Erfindung die Verwendung der neuen Beschichtungen zum Schutz von Oberflächen vor der Beschädigung durch mechanische Einwirkung, insbesondere vor Kratzern.

### Stand der Technik

Der Schutz von Oberflächen vor der Beschädigung durch mechanische Einwirkung, insbesondere vor Kratzern, bietet zahlreiche schwerwiegende Probleme, die weder zur Zufriedenheit der Fachwelt noch der Verbraucher gelöst werden konnten. Durch das Zerkratzen ihrer Oberflächen werden insbesondere wirtschaftlich wertvolle Gebrauchsgegenstände in ihrer Brauchbarkeit, ihrer dekorativen Wirkung und in ihrem wirtschaftlichen Wert nachhaltig geschädigt. Außerdem können die Kratzer Angriffspunkte für die weitere Beschädigung oder Zerstörung der Gebrauchsgegenstände beispielsweise durch Korrosion bieten.

Von diesen Problemen sind vor allem Kraftfahrzeuge im Innen- und Außenbereich oder Teile hiervon, Bauwerke im Innen- und Außenbereich, Möbel, Fenster und Türen, Kleinteile, wie Muttern, Schrauben, Radkappen oder Felgen, Coils, Container, Emballagen, elektrotechnische Bauteile, wie Motorwicklungen oder Transformatorwicklungen, und weiße Ware, wie Haushaltsgeräte, Heizkessel und Radiatoren, oder Glashohlkörper, wie Flaschen, Kolben, Rohre oder Gläser, betroffen.

Ein weiteres Problem tritt bei der Entwicklung kratzfester Beschichtungen für Oberflächen auf. So ist die zielgerichtete Entwicklung von Beschichtungsstoffen, die kratzfeste Beschichtungen liefern sollen, sehr aufwändig, weil es in stofflicher Hinsicht an den erforderlichen Strukturwirkungsbeziehungen zwischen den Bestandteilen der Beschichtungsstoffe einerseits und dem Eigenschaftsprofil der hieraus hergestellten Beschichtungen fehlt. Erschwerend kommt hinzu, dass der Zusammenhang zwischen wichtigen physikalisch chemischen und mechanischen Kenngrößen von Beschichtungen, wie Glasübergangstemperatur, Kristallinität, Härte, Plastizität, Flexibilität, Elastizität, Sprödigkeit und Schichtdicke, einerseits und Kratzfestigkeit andererseits in den allermeisten Fällen nicht bekannt ist. Noch komplexer wird das Problem dadurch, dass Kratzer in der unterschiedlichsten Art und Weise erzeugt werden und dass Beschichtungen in unterschiedlicher Weise hierauf reagieren. So kann sich eine Beschichtung auf einem Kraftfahrzeug beispielsweise hinsichtlich der Bildung von Waschkratzem, wie sie durch die rotierenden Bürsten in Autowaschanlagen hervorgerufen werden, als stabil erweisen, wogegen sie empfindlich gegen das Zerkratzen durch fliegende Sandkörner ist.

Sollte es dennoch gelingen, Beschichtungen kratzfest einzustellen, können andere wichtige Eigenschaften, wie Transparenz, dekorative Wirkung, erreichbare Schichtdicke, Haftfestigkeit, Chemikalienbeständigkeit, Witterungsbeständigkeit und Wirtschaftlichkeit in Mitleidenschaft gezogen werden.

Um die Kratzfestigkeit von Beschichtungen beurteilen zu können, ohne aufwändige Praxistests durchführen zu müssen, werden häufig alternative Untersuchungsmethoden, wie die Dynamisch-Mechanische Analyse (DMA) oder die Dynamisch-Mechanische Thermo-Analyse (DMTA), oder auch verschiedene Methoden zur Messung der Oberflächenhärte, wie Vickers-Härte, Bleistift-Härte, Pendelhärte oder Mikoeindringhärte, herangezogen.

Es liegt zunächst nahe, die in dieser Weise gemessene Härte der Oberflächen der Beschichtungen mit ihrer Kratzfestigkeit zu korrelieren. Es zeigt sich jedoch, dass eine einfache Korrelation nicht möglich ist (vgl. beispielsweise M. Bannert, M. Osterhold, W. Schubert, Th. Brock, in European Coatings Journal, 11, Seiten 31 ff., 2001). So können zwar sehr harte Oberflächen eine hervorragende Kratzfestigkeit zeigen, jedoch sind die betreffenden Beschichtungen spröde, so dass häufig Spannungsrisse, insbesondere bei der Aushärtung der Beschichtungen, der auftreten. Dies ist insbesondere bei den aus den Patentanmeldungen DE 199 10 876 A1, DE 38 36 815 A1, DE 198 4 3 581 A1, DE 199 09 877 A1, DE 139 40 858 A1, DE 198 16 136 A1, EP 0 365 027 A2 oder EP 0 450 625 A1 bekannten Beschichtungen auf der Basis von Polysiloxan-Solen, die beispielsweise unter der Marke Ormocer ^{®} (organically modified ceramic) vertrieben werden, der Fall. Diese kratzfesten Beschichtungen können auch nicht in Schichtdicken > 10 µm hergestellten werden, weil sie dann zum Abplatzen neigen. Gleiches gilt für die aus den Patentanmeldungen EP 0 832 947 A und WO 99/52964 A bekannten Beschichtungen, die Nanopartikel enthalten.

Eine Korrelation zwischen den Ergebnissen der DMA von Beschichtungen (vgl. beispielsweise R. Bethke, K. Schmidt, M. Eder, in Metalloberfläche, 55. Jahrgang, Seite 50ff., 2001, oder E. Frigge, Farbe und Lack, 106. Jahrgang, Heft 7, Seite 78 ff.) oder der DMTA (vgl. das deutsche Patent DE 197 09 467 C1) und der Kratzfestigkeit ist möglich. Indes können mit Hilfe dieser Korrelation vor allem Beschichtungen, deren Oberfläche nach dem Zerkratzen wieder ausheilt, entwickelt werden, wogegen sich Beschichtungen, die wie besonders harte Oberflächen erst gar nicht zerkratzt werden, nur schwer entwickeln lassen.

Elastomere weisen eine hohe Oberflächenelastizität auf, so dass sie nicht oder nur schwer durch mechanische Einwirkung geschädigt werden (vgl. K. T. Gillen, E. R. Terrill und R. M. Winter, in Rubber Chemistry and Technology, Band 74, Seite 428, 2000, oder »Zukunftsweisende Technologie in der Mikrohärtebestimmung«, Firmenschrift der Helmut Fischer GmbH, Sindelfingen). Indes sind diese Materialien nur wenig oder gar nicht transparent und haben einen geringen Glanz, so dass sie nicht für transparente, hoch glänzende, dekorative Beschichtungen in Betracht kommen. Außerdem lassen sich diese Materialien häufig nur schwer mit Beschichtungsstoffen beschichteten bzw. überlackieren.

Duroplastische Beschichtungen, die aus mit UV-Strahlung härtbaren Beschichtungsstoffen hergestellt worden sind und eine elastische Tiefenrückfederung nach DIN 55676 von 75 und 79% aufweisen, sind aus der Diplomarbeit von Matthias Walenda, Gesamthochschule Paderborn, Arbeitskreis Prof. Dr. Goldschmidt, 1998, bekannt. Über einen Zusammenhang mit der Kratzfestigkeit wird nichts gesagt.

### Aufgabe der Erfindung

Aufgabe der vorliegenden Erfindung ist es, neue Beschichtungen bereitzustellen, die durch mechanische Einwirkung nicht oder nur in geringem Umfang zu beschädigen sind und insbesondere nicht oder nur in geringem Umfang zu zerkratzen sind.

Dabei sollen die neuen kratzfesten Beschichtungen nicht mehr die Nachteile des Standes der Technik aufweisen.

Die neuen kratzfesten Beschichtungen sollen transparent und hochglänzend sein, so dass sie sich nicht nur zu schützenden, sondern auch zu dekorativen Zwecken eignen. Außerdem sollen die neuen kratzfesten Beschichtungen eine besonders hohe Haftfestigkeit zu den zu schützenden oder zu dekorierenden Oberflächen, eine sehr gute Korrosionsschutzwirkung sowie eine hohe Chemikalien-, Lösemittel-, Witterungs-, Wasser- und Feuchtigkeitsbeständigkeit haben. Sie sollen in einfacher Weise wirtschaftlich herstellbar sein. Nicht zuletzt sollen sie auch in Schichtdicken > 30 µm hergestellt werden können, ohne dass ihr besonders vorteilhaftes Eigenschaftsprofil geschädigt wird, und sie sollen gut überlackierbar sein, damit sie in einfacher Weise reparaturlackiert werden können.

Die neuen kratzfesten Beschichtungen sollen sich vor allem zum Schutz und zur Dekoration von Kraftfahrzeugen im Innen- und Außenbereich oder Teilen hiervon, Bauwerken im Innen- und Außenbereich, Möbeln, Fenstern und Türen, Folien, Kleinteilen, wie Muttern, Schrauben, Radkappen oder Felgen, Coils, Container, Emballagen, elektrotechnischen Bauteilen, wie Motorwicklungen oder Transformatorwicklungen, weißer Ware, wie Haushaltsgeräte, Heizkessel und Radiatoren, und Glashohlkörper, wie Flaschen, Kolben, Rohre oder Gläser, eignen.

Nicht zuletzt war es die Aufgabe der vorliegenden Erfindung, ein Verfahren zu finden, dass die gezielte Herstellung von kratzfesten Beschichtungen erlaubt, ohne dass aufwändige Praxistests zur Entwicklung geeigneter Beschichtungsstoffe durchgeführt werden müssen.

### Die erfindungsgemäßen Lösung

Demgemäß wurden die neuen transparente Beschichtungen einer Schichtdicke von mindestens 30 µm, einer elastischen Tiefenrückfederung nach DIN 55676 von mindestens 70% und einer Kratzfestigkeit, entsprechend einer Note von höchstens 2 im Stahlwollekratztest nach DIN 1041 nach 10 Doppelhüben, gefunden, die im Folgenden als »erfindungsgemäße Beschichtungen« bezeichnet werden.

Außerdem wurde das neue Verfahren zur Herstellung von transparenten Beschichtungen durch Applikation eines Beschichtungsstoffs auf ein Substrat oder auf eine hierauf befindliche ungehärtete, partiell gehärtete oder gehärtete Schicht, gefunden, bei dem man
(1) einen Beschichtungsstoff auswählt, der nach seiner Verfestigung oder Härtung eine elastische Tiefenrückfederung nach DIN 55676 von mindestens 70% und eine Kratzfestigkeit, entsprechend einer Note von höchstens 2 im Stahlwollekratztest nach DIN 1041 nach 10 Doppelhüben, aufweist, und
(2) den Beschichtungsstoff (1) in einem Schritt appliziert.

Im Folgenden wird das neue Verfahren zur Herstellung von transparenten Beschichtungen als »erfindungsgemäßes Verfahren« bezeichnet.

### Die Vorteile der erfindungsgemäßen Lösung

Im Hinblick auf dem Stand der Technik war es überraschend und für den Fachmann nicht vorhersehbar, dass die Aufgabe, die der vorliegenden Erfindung zugrundelag, mit Hilfe der erfindungsgemäßen Beschichtungen und mit Hilfe des erfindungsgemäßen Verfahrens gelöst werden konnte.

Insbesondere war es überraschend, dass ausgerechnet vergleichsweise weiche Materialien mit einer hohen relativen elastischen Tiefenrückfederung und einer vergleichsweise niedrigen Universalhärte die erfindungsgemäße Lösung boten. Aufgrund der erfindungsgemäßen Auswahlregel konnten in einfacher Weise geeignete Beschichtungsstoffe gezielt ausgewählt werden, die die erfindungsgemäßen Beschichtungen lieferten, ohne dass dafür aufwändige Praxistests notwendig waren. Dadurch gestaltete sich die Entwicklung und die Herstellung der erfindungsgemäßen Beschichtungen besonders wirtschaftlich.

Die erfindungsgemäßen Beschichtungen waren hochkratzfest und transparent. Darüber hinaus wiesen sie eine besonders hohe Haftfestigkeit zu den zu schützenden oder zu dekorierenden Oberflächen der Substrate, eine sehr gute Korrosionsschutzwirkung sowie eine hohe Chemikalien-, Lösemittel-, Witterungs-, Wasser- und Feuchtigkeitsbeständigkeit auf.

Nicht zuletzt konnten sie auch in Schichtdicken > 30 µm hergestellten werden, ohne dass ihr besonders vorteilhaftes Eigenschaftsprofil geschädigt wurde.

Ihre Oberflächen wiesen sehr gute adhäsive Eigenschaften auf, so dass sie sehr gut überlackierbar waren und in einfacher Weise reparaturlackiert werden konnten.

Die neuen kratzfesten Beschichtungen waren daher hervorragend zum Schutz und zur Dekoration von Kraftfahrzeugen im Innen- und Außenbereich oder Teilen hiervon, Bauwerken im Innen- und Außenbereich, Möbeln, Fenstern und Türen, Folien, Kleinteilen, wie Muttern, Schrauben, Radkappen oder Felgen, Coils, Container, Emballagen, elektrotechnischen Bauteilen, wie Motorwicklungen oder Transformatorwicklungen, weißer Ware, wie Haushaltsgeräte, Heizkessel und Radiatoren, und Glashohlkörper, wie Flaschen, Kolben, Rohre oder Gläser, geeignet.

### Ausführliche Beschreibung der Erfindung

Die erfindungsgemäßen Beschichtungen weisen eine Schichtdicke von mindestens 30, vorzugsweise mindestens 40 und insbesondere mindestens 50 µm auf.

Sie haben eine relative elastische Tiefenrückfederung nach DIN 55676 von mindestens 70%, vorzugsweise mindestens 74%, bevorzugt mindestens 78%, besonders bevorzugt mindestens 80%, ganz besonders bevorzugt mindestens 82% und insbesondere mindestens 84% . Geeignete Messgeräte zur Bestimmung der relativen elastischen Tiefenrückfederung werden beispielsweise von der Firma Helmut Fischer GmbH, Sindelfingen (http://www.Helmut-Fischer.com) unter der Marke Fischerscope ^{®} vertrieben.

Außerdem haben sie eine Kratzfestigkeit einer Note von höchstens 2, insbesondere 1, auf einer Notenskala von 1 (keine Schädigung) bis 6 (sehr starke Schädigung) im Stahlwollekratztest nach DIN 1041 nach 10 Doppelhüben.

Vorzugsweise weisen die erfindungsgemäßen Beschichtungen bei einer an die Schichtdicke angepassten Kraft von 25,6, vorzugsweise 10 und insbesondere 5 mN und einer Kriechzeit von mindestens 20 s im Kriechprozess eine Universalhärte nach DIN 55676 von < 100, bevorzugt < 80 und insbesondere < 60 N/mm² auf. Die mittlere Eindringtiefe liegt soll dabei maximal 10% der Schichtdicke nicht überschreiten, um Einflüsse des Substrats auszuschließen.

Ihre Transmission für Licht einer Wellenlänge zwischen 400 bis 700 nm ist vorzugsweise > 90, bevorzugt > 92 und insbesondere > 95%.

Auf entfettetem Floatglas und entfettetem Edelstahl 1.4301 weisen sie vorzugsweise eine Haftung gemäß DIN ISO 2409 von GT/TT 0/0 auf. Auch auf den üblichen und bekannten pigmentierten Basislackierungen, wie sie in den in der hochwertigen Automobilserienlackierung eingesetzten, farb- und/oder effektgebenden Mehrschichtlackierungen vorliegen, haben sie eine Haftung gemäß DIN ISO 2409 von GT/TT 0/0.

Die erfindungsgemäßen Beschichtungen können thermoplastisch oder duroplastisch sein. Die thermoplastischen erfindungsgemäßen Beschichtungen können aus physikalisch härtbaren Beschichtungsstoffen oder aus thermoplastischen Materialien hergestellt werden. Die duroplastischen erfindungsgemäßen Beschichtungen können aus härtbaren Beschichtungsstoffen hergestellt werden. Vorzugsweise sind die erfindungsgemäßen Beschichtungen duroplastisch.

Die Auswahl der geeigneten Beschichtungsstoffe wird nach dem erfindungsgemäßen Verfahren so getroffen, dass die hieraus hergestellten Beschichtungen die erfindungswesentlichen Eigenschaften haben.

Die duroplastischen erfindungsgemäßen Beschichtungen sind aus härtbaren Beschichtungsstoffen herstellbar. Die härtbaren Beschichtungsstoffe können thermisch, mit aktinischer Strahlung, vorzugsweise mit elektromagnetischer Strahlung, wie nahes Infrarot (NIR), sichtbares Licht, UV-Strahlung oder Röntgenstrahlung, insbesondere UV-Strahlung, und Korpuskularstrahlung, wie Elektronenstrahlung, oder thermisch und mit aktinischer Strahlung (Dual-Cure) gehärtet werden. Vorzugsweise sind die Beschichtungsstoffe thermisch härtbar.

Besonders gut geeignete härtbare, insbesondere thermisch härtbare, Beschichtungsstoffe bestehen aus anorganischen und organischen Bestandteilen. Vorzugsweise weisen die härtbaren Beschichtungsstoffe einen Glührückstand von mindestens 10, bevorzugt mindestens 15 und insbesondere mindestens 20 Gew.-% auf.

Ganz besonders gut geeignete thermisch härtbare Beschichtungsstoffe enthalten eine wässrige Dispersion eines pH-Wertes von 2 bis 7, enthaltend
(A) mindestens ein quellbares Polymer oder Oligomer mit anionischen und/oder potenziell anionischen und/oder nicht-ionischen hydrophilen funktionellen Gruppen,
(B) obefflächenmodififierte, kationisch stabilisierte, anorganische Nanopartikel mindestens einer Art und
(C) mindestens ein Amphiphil,
oder sie bestehen hieraus.

Die erfindungsgemäß zu verwendende Dispersion hat einen pH-Wert von 2 bis 7, vorzugsweise 2,5 bis 7 und insbesondere 3 bis 6,5. Seine Einstellung erfolgt durch Zugabe von anorganischen und/oder organischen Säuren, die keine unerwünschten Reaktionen mit den Ausgangsprodukten und den Bestandteilen der erfindungsgemäß zu verwendenden Dispersion eingehen, wie Fällungsreaktionen oder die Zersetzung von Nanopartikeln (B). Beispiele geeigneter Säuren sind Ameisensäure, Essigsäure und Salzsäure.

Der Festkörpergehalt der erfindungsgemäß zu verwendenden Dispersion kann sehr breit variieren und richtet sich nach den Erfordernissen des Einzelfalls. Vorzugsweise liegt er bei 10 bis 80, bevorzugt 15 bis 75, besonders bevorzugt 20 bis 70, ganz besonders bevorzugt 25 bis 65 und insbesondere 30 bis 60 Gew.-%, jeweils bezogen auf die Gesamtmenge der erfindungsgemäß zu verwendenden Dispersion.

Der erste wesentliche Bestandteil der erfindungsgemäß zu verwendenden Dispersion ist mindestens ein, insbesondere ein, quellbares Polymer oder Oligomer (A), insbesondere ein Polymer (A), mit anionischen und/oder potenziell anionischen funktionellen Gruppen.

Hier und im Folgenden werden unter Polymeren Verbindungen verstanden, die im statistischen Mittel mehr als 10 Monomereinheiten im Molekül enthalten. Unter Oligomeren werden Verbindungen verstanden, die im statistischen Mittel 2 bis 15 Monomereinheiten im Molekül enthalten. Ergänzend wird hierzu auf Römpp Lexikon Lacke und Druckfarben, Georg Thieme Verlag, Stuttgart, New York, 1998, Seite 425, »Oligomere«, und Seite 464, »Polymere«, verwiesen.

Vorzugsweise werden die anionischen und potenziell anionischen funktionellen Gruppen aus der Gruppe, bestehend aus Carbonsäure-, Sulfonsäure- und Phosphonsäuregruppen, sauren Schwefelsäure- und Phosphorsäureestergruppen sowie Carboxylat-, Sulfonat-, Phosphonat-, Sulfatester- und Phosphatestergruppen, insbesondere Carbonsäure- und Carboxylatgruppen, ausgewählt.

Der Gehalt der Polymeren und Oligomeren (A) an anionischen und/oder potenziell anionischen funktionellen Gruppen kann sehr breit variieren und richtet sich nach den Erfordernissen des Einzelfalls, insbesondere danach, wie viele dieser Gruppen erforderlich sind, um die Quellbarkeit der Polymeren und Oligomeren (A) in wässrigen Medien eines pH-Wertes von 2 bis 7 sicherzustellen. Vorzugsweise entspricht der Gehalt einer Säurezahl von 5 bis 70, bevorzugt 6 bis 60, besonders bevorzugt 7 bis 50, ganz besonders bevorzugt 8 bis 40 und insbesondere 9 bis 30 mg KOH/g. Unter Festkörper wird hier und im folgenden die Summe der Bestandteile verstanden, die die aus der erfindungsgemäß zu verwendenden Dispersion hergestellten Beschichtungen bilden.

Vorzugsweise weisen die quellbaren Polymeren und Oligomeren (A) bei pH-Werten von 2 bis 7 eine elektrophorethische Mobilität ≤ -0,5, bevorzugt ≤ -2,0 (µm/s)/(V/cm), auf. Die elektrophorethische Mobilität kann mit Hilfe der Laser-Doppler-Elektrophorese bestimmt. Dabei kann als Messgerät der Zetasizer ^{®} 3000 der Firma Malvem angewandt werden. Es kommen aber auch mikroelektrophoretische (mikroskopische) Messverfahren in Betracht.

Vorzugsweise werden die Polymeren und Oligomeren (A) aus der Gruppe der Copolymerisate, die durch die ein- oder zwei- oder mehrstufige, kontrollierte radikalische Copolymerisation in einem wässrigen oder einem organischen, insbesondere in einem wässrigen, Medium erhältlich sind und die im Detail in der deutschen Patentanmeldung DE 199 30 664 A1, Seite 4, Zeile 28, bis Seite 9, Zeile 49, beschrieben werden, augewählt. Diese Copolymerisate (A) können auch noch hergestellt werden, indem man ein als Zwischenstufe gebildetes Copolymerisat nach Zugabe geringer Mengen an Initiatoren der radikalischen Polymerisation oder ohne eine solche Zugabe mit mindestens einem olefinisch ungesättigten Monomeren (co)polymerisiert.

In die Copolymerisate (A) können reaktive funktionelle Gruppen eingebaut werden, die mit den nachstehend beschriebenen komplementären reaktiven funktionellen Gruppen (S 2) in den nachstehend beschriebenen Verbindungen I thermische Vernetzungsreaktionen eingehen können. Außerdem können funktionelle Gruppen eingebaut werden, die den Copolymerisaten (A) selbstvernetzende Eigenschaften verleihen wie N-Methylol- oder N-Alkoxymethyl- oder N-Methylolethergruppen. Nicht zuletzt können in die Copolymerisate (A) mindestens eine der nachstehend beschriebenen reaktiven funktionellen Gruppen (S 1) eingebaut werden, die mindestens eine mit aktinischer Strahlung aktivierbare Bindung enthalten, die mit den in den nachstehend beschriebenen Verbindungen I gegebenenfalls vorhandenen, mit aktinischer Strahlung aktivierbaren Bindungen reagieren können. Selbstverständlich können beide Arten von reaktiven funktionellen Gruppen (S 1) und (S 2) in die Copolymerisate (A) eingebaut werden. Die betreffenden Copolymerisate (A) sind dann thermisch und mit aktinischer Strahlung härtbar, was von der Fachwelt auch als Dual-Cure bezeichnet wird.

Hier und im Folgenden wird unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung, wie Elektronenstrahlung, verstanden.

Das Copolymerisat (A) kann somit mindestens eine, vorzugsweise mindestens zwei, reaktive funktionelle Gruppen (S 2) enthalten, welche mit komplementären reaktiven funktionellen Gruppen (S 2) der nachstehend beschriebenen Verbindungen I thermische Vernetzungsreaktionen eingehen können. Die reaktiven funktionellen Gruppen können dabei über die Monomeren (a) in die Copolymerisate (A) eingebracht oder nach deren Synthese durch polymeranaloge Reaktionen eingeführt werden. Dabei ist darauf zu achten, dass die reaktiven funktionellen Gruppen (S 2) keine unerwünschten Reaktionen miteinander oder mit dem wässrigen Medium eingehen, wie beispielsweise eine unerwünschte Salzbildung, die Bildung unlöslicher Niederschläge oder eine vorzeitige Vernetzung, was alles die Stabilität der erfindungsgemäß zu verwendende Dispersion nachteilig beeinflusst.

Beispiele geeigneter erfindungsgemäß zu verwendender komplementärer reaktiver funktioneller Gruppen (S 2), welche Vernetzungsreaktionen eingehen, sind in der folgenden Übersicht zusammengestellt. In der Übersicht steht die Variable R¹ für substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste.

### Übersicht: Beispiele komplementärer reaktiver funktioneller Gruppen (S 2)

| **Copolymerisat (A) und** | **Verbindung I** |
|---|---|
| oder | |
| **Verbindung I und** | **Copolymerisat (A)** |
| -SH | -C(O)-OH |
| -OH | -C(O)-O-C(O)- |
| | -NH-C(O)-OR¹ |
| | -CH₂-OH |
| | -CH₂-O-CH₃ |
| | -NH-C(O)-CH(-C(O)OR¹)₂ |
| | -NH-C(O)-CH(-C(O)OR¹)(-C(O)-R¹) |
| | >Si(OR¹)₂ |
| -C(O)-OH | 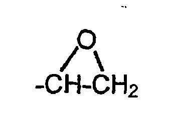 |
| -O-C(O)-CR⁵=CH₂ | -OH |
| -O-CR=CH₂ | -C(O)-CH₂-C(O)-R¹ |
| | -CH=CH₂ |

Als Reaktoren für die (Co)Polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE 198 28 742 A1 oder EP 0 498 583 A1 oder in dem Artikel von K. Kataoka in Chemical Engineering Science, Band 50, Heft 9, 1995, Seiten 1409 bis 1416, beschrieben werden, in Betracht. Vorzugsweise wird die radikalische Copolymerisation in Rührkesseln oder Taylorreaktoren, durchgeführt, wobei die Taylorreaktoren so ausgelegt werden, dass auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt (vgl. die deutsche Patentanmeldung DE 198 28 742 A1).

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150, ganz besonders bevorzugt 50 bis 120 und insbesondere 55 bis 110 °C gewählt wird.

Bei Verwendung besonders leicht flüchtiger Monomere kann die Copolymerisation auch unter Druck, vorzugsweise unter 1,5 bis 3.000 bar, bevorzugt 5 bis 1.500 und insbesondere 10 bis 1.000 bar mit durchgeführt werden.

Hinsichtlich der Molekulargewichtsverteilung ist das Copolymerisat (A) keinerlei Beschränkungen unterworfen. Vorteilhafterweise wird aber die Copolymerisation so geführt, dass ein Verhältis Mw/Mn, gemessen mit Gelpermeationschromatographie unter Verwendung von Polystyrol als Standard, von ≤ 4, bevorzugt ≤ 2 und insbesondere ≤ 1,5 sowie in einzelnen Fällen auch ≤ 1,3 resultiert. Die Molekulargewichte der Copolymerisate (A) sind durch die Wahl des Verhältnisses von Monomer
(a) zu Monomer (b) zu radikalischem Initiator in weiten Grenzen steuerbar. Dabei bestimmt insbesondere der Gehalt an Monomer (b) das Molekulargewicht, und zwar derart, dass je größer der Anteil an Monomer
(b) ist, desto geringer ist das erhaltene Molekulargewicht (vgl. hierzu die deutsche Patentanmeldung DE 199 30 664 A1).

Der Gehalt der erfindungsgemäß zu verwendenden Dispersion an dem Copolymerisat (A) kann breit variieren und richtet sich nach den Erfordernissen des Einzelfalls. Vorzugsweise ist das Copolymerisat (A) in der erfindungsgemäß zu verwendenden Dispersion in einer Menge von, bezogen auf die Summe der wesentlichen Bestandteile (A), (B) und (C), 1 bis 30 Gew.-% enthalten.

Der weitere wesentliche Bestandteil der erfindungsgemäß zu verwendenden Dispersion sind oberflächenmodifizierte, kationisch stabilisierte, anorganische Nanopartikel (B) mindestens einer Art, insbesondere einer Art.

Vorzugsweise werden die zu modifizierenden Nanopartikel aus der Gruppe, bestehend aus Haupt- und Nebengruppen-Metallen und deren Verbindungen ausgewählt. Bevorzugt werden die Haupt- und Nebengruppen-Metalle aus Metallen der dritten bis fünften Hauptgruppe, der dritten bis sechsten sowie der ersten und zweiten Nebengruppe des Periodensystems der Elemente sowie den Lanthaniden ausgewählt. Besonders bevorzugt werden Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Silber, Cer, Titan und Zirkonium eingesetzt.

Vorzugsweise handelt es sich bei den Verbindungen der Metalle um die Oxide, Oxidhydrate, Sulfate oder Phosphate.

Bevorzugt werden Silber, Siliziumdioxid, Aluminiumoxid, Aluminiumoxidhydrat, Titandioxid, Zirkoniumoxid, Ceroxid und Mischungen hiervon, besonders bevorzugt Silber, Ceroxid, Siliziumdioxid, Aluminiumoxidhydrat und Mischungen hiervon, ganz besonders bevorzugt Aluminiumoxidhydrat und insbesondere Böhmit verwendet.

Vorzugsweise weisen die zu modifizierenden Nanopartikel eine Primärpartikelgröße < 50, bevorzugt 5 bis 50, insbesondere 10 bis 30 nm, auf.

Die erfindungsgemäß zu verwendenden Nanopartikel (B) bzw. deren Oberfläche sind mit mindestens einer Verbindung der allgemeinen Formel I:

[(S-)ₒ-L-]ₘM(R)ₙ(H)ₚ (I),

modifiziert.

In der allgemeinen Formel I haben die Indizes und der Variablen die folgende Bedeutung:
- S: reaktive funktionelle Gruppe;
- L: mindestens zweibindige organische verknüpfende Gruppe;
- H: hydrolysierbare einbindige Gruppe oder hydrolysierbares Atom;
- M: zwei- bis sechswertiges Hauptgruppen- und Nebengruppen-Metall;
- R: einbindiger organischer Rest;
- o: eine ganze Zahl von 1 bis 5, insbesondere 1;
- m+n + p: eine ganze Zahl von 2 bis 6, insbesondere 3 oder 4;
- p: eine ganze Zahl von 1 bis 6, insbesondere 1 bis 4;
- m und n: Null oder eine ganze Zahl von 1 bis 5, vorzugsweise 1 bis 3, insbesondere 1, speziell m = 1 und n = 0.

Dabei kann die Modifizierung durch physikalische Adsorption der Verbindungen I an die Oberfläche der unmodifizierten Nanopartikel und/oder durch chemische Reaktion der Verbindungen I mit geeigneten reaktiven funktionellen Gruppen an der Oberfläche der unmodifizierten Nanopartikel erfolgen. Vorzugsweise erfolgt die Modifizierung über chemische Reaktionen.

Beispiele geeigneter Metalle M sind die vorstehend beschriebenen.

Vorzugsweise wird die reaktive funktionelle Gruppe S aus der Gruppe, bestehend aus (S 1) reaktiven funktionellen Gruppen, die mindestens eine mit aktinischer Strahlung aktivierbare Bindung enthalten, und (S 2) reaktiven funktionellen Gruppen, die mit Gruppen ihrer Art ("mit sich selbst") und/oder mit komplementären reaktiven funktionellen Gruppen thermisch initiierte Reaktionen eingehen, ausgewählt. Beispiele geeigneter reaktiver funktioneller Gruppen (S 2) sind die vorstehend beschriebenen, insbesondere Epoxidgruppen.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte reaktive Gruppe (S 1) eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe (S 1) vorliegen. Erfindungsgemäß ist es von besonderem Vorteil zwei Doppelbindungen, insbesondere eine Doppelbindung, zu verwenden.

Die mit aktinischer Strahlung aktivierbaren Bindungen können über Kohlenstoff-Kohlenstoffbindungen oder Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Urethan-, Hydrazid-, Harnstoff-, Thioharnstoff-, Carbonyl-, Thiocarbonyl-, Sulfon- oder Sulfoxidgruppen, insbesondere aber über Kohlenstoff-Kohlenstoff-Bindungen, Carbonsäureestergruppen und Ethergruppen, mit der verknüpfenden Gruppe L verbunden sein.

Besonders bevorzugte reaktive funktionelle Gruppen (S 1) sind daher (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Methcrylatgruppen (S 1).

Die Variable H steht für eine hydrolysierbare einbindige Gruppe oder für ein hydrolysierbares Atom.

Beispiele geeigneter hydrolysierbarer Atome sind Wasserstoffatome und Halogenatome, insbesondere Chlor- und Bromatome.

Vorzugsweise werden die hydrolysierbaren einbindigen Gruppen verwendet. Beispiele geeigneter Gruppen dieser Art sind Gruppen der allgemeinen Formel II:

-X-R (II).

In der allgemeinen Formel II steht steht die Variable X für ein Sauerstoffatom, Schwefelatom und/oder eine Gruppe >NR², worin R² eine Alkylgruppe mit 1 bis 4 Kohlenstoffatomen, insbesondere Methyl, Ethyl, Propyl und n-Butyl, bedeutet. Bevorzugt steht X für ein Sauerstoffatom.

R steht für einen einbindigen organischen Rest. Der einbindige Rest R kann substituiert oder unsubstituiert sein; vorzugsweise ist er unsubstituiert. Er kann aromatisch, aliphatisch oder cycloaliphatisch sein. Ein einbindiger Rest R wird dann als aromatisch angesehen, wenn X direkt mit dem aromatischen Rest verbunden ist. Diese Regel ist sinngemäß auf die aliphatischen und cycloaliphatischen Reste anzuwenden. Vorzugsweise werden lineare oder verzweigte, insbesondere lineare, aliphatische Reste eingesetzt. Bevorzugt sind niedere aliphatische Reste. Von diesen werden die Methylgruppen oder die Ethylgruppen ganz besonders bevorzugt verwendet.

Die Variable L steht für eine mindestens zweibindige, insbesondere zweibindige, organische verknüpfende Gruppe.

Beispiele geeigneter zweibindiger organischer vernüpfender Gruppen L sind gegebenenfalls Heteroatome enthaltende, aliphatische, aromatische, cycloaliphatische und aromatisch-cycloaliphatische Kohlenwasserstoffreste, wie
(1) substituierte oder unsubstituierte, bevorzugt unsubstituierte, lineare oder verzweigte, vorzugsweise lineare, Alkandiyl-Reste mit 3 bis 30, bevorzugt 3 bis 20 und insbesondere 3 Kohlenstoffatomen, die innerhalb der Kohlenstoffkette auch cyclische Gruppen enthalten können, insbesondere Trimethylen, Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyl, Tetradecan-1,14-diyl, Pentadecan-1,15-diyl, Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, 2-Heptyl-1-pentyl-cyclohexan-3,4-bis(non-9-yl), Cyclohexan-1,2-, -1,4- oder -1,3-bis(methyl), Cyclohexan-1,2-, 1,4- oder 1,3-bis(eth-2-yl), Cyclohexan-1,3-bis(prop-3-yl) oder Cyclohexan-1,2-, 1,4- oder 1,3-bis(but-4-yl);
(2) substituierte oder unsubstituierte, bevorzugt unsubstituierte, lineare oder verzweigte, vorzugsweise lineare, Oxalkandiyl-Reste mit 3 bis 30, bevorzugt 3 bis 20 und insbesondere 3 bis 6 Kohlenstoffatomen, die innerhalb der Kohlenstoffkette auch cyclische Gruppen enthalten können, insbesondere Oxapropan-1,4-diyl, Oxabutan-1,5-diyl, Oxapentan-1,5-diyl, Oxahexan-1,7-diyl oder 2-Oxapentan-1,5-diyl;
(3) zweiwertige Polyesterreste mit wiederkehrenden Polyesteranteilen der Formel -(-CO-(CHR³)ᵣ- CH₂-O-)- aus. Hierbei ist der Index r bevorzugt 4 bis 6 und der Substitutent R³ = Wasserstoff, ein Alkyl-, Cycloalkyl- oder Alkoxy-Rest. Kein Substituenf enthält mehr als 12 Kohlenstoffatome;
(4) lineare Polyetherreste, vorzugsweise mit einem zahlenmittleren Molekulargewicht von 400 bis 5.000, insbesondere von 400 bis 3.000, die sich von Poly(oxyethylen)glykolen, Poly(oxypropylen)glykolen und Poly(oxybutylen)glykolen ableiten;
(5) lineare Siloxanreste, wie sie beispielsweise in Siliconkautschuken vorliegen, hydrierte Polybutadien- oder Polyisoprenreste, statistische oder alternierende Butadien-Isopren-Copolymerisatreste oder Butadien-Isopren-Pfropfmischpolymerisatreste, die noch Styrol einpolymerisiert enthalten können, sowie Ethylen-Propylen-Dienreste;
(6) Phen-1,4-, -1,3- oder-1,2-ylen, Naphth-1,4-, -1,3-, -1,2-, -1,5-oder-2,5-ylen, Propan-2,2-di(phen-4'-yl), Methan-di(phen-4'-yl), Diphenyl-4,4'-diyl oder 2,4- oder 2,6-Toluylen; oder
(7) Cycloalkandiyl-Reste mit 4 bis 20 Kohlenstoffatomen, wie Cyclobutan-1,3-diyl, Cyclopentan-1,3-diyl, Cyclohexan-1,3- oder-1,4-diyl, Cycloheptan-1,4-diyl, Norbornan-1,4-diyl, Adamantan-1,5-diyl, Decalin-diyl, 3,3,5-Trimethyl-cyclohexan-1,5-diyl, 1-Methylcyclohexan-2,6-diyl, Dicyclohexylmethan-4,4'-diyl, 1,1'-Dicyclohexan-4,4'-diyl oder 1,4-Dicyclohexylhexan-4,4"-diyl, insbesondere 3,3,5-Trimethyl-cyclohexan-1,5-diyl oder Dicyclohexylmethan-4,4'-diyl.

Besonders bevorzugt werden die verknüpfenden Gruppen L (1) und L (2), ganz besonders bevorzugt Trimethylen, Tetramethylen, Pentamethylen, Hexamethylen, Heptamethylen, Octamethylen, Oxapropan-1,4-diyl oder 2-Oxapentan-1,5-diyl und insbesondere Trimethylen, Oxapropan-1,4-diyl oder 2-Oxapentan-1,5-diyl verwendet.

In der allgemeinen Formel I steht die Variable o für eine ganze Zahl von 1 bis 5, vorzugsweise 1 bis 4, bevorzugt 1 bis 3 und besonders bevorzugt 1 und 2. Insbesondere ist o gleich 1.

Die Verbindungen I können auch in komplexierter Form eingesetzt werden, wie dies beispielsweise in der internationalen Patentanmeldung WO 09/52964, Seite 8, Zeilen 12 bis 20, beschrieben wird.

Die Verbindungen I sind üblich und bekannt und zu einem großen Teil im Handel erhältlich. Gut geeignete. Verbindungen I sind beispielsweise aus der
- internationalen Patentanmeldung WO 99/52964, Seite 6, Zeile 1, bis Seite 8, Zeile 20,
- der deutschen Patentanmeldung DE 197 26 829 A1, Spalte 2, Zeile 27, bis Spalte 3, Zeilen 38,
- der deutschen Patentanmeldung DE 199 10 876 A1, Seite 2, Zeile 35, bis Seite 3, Zeile 12,
- der deutschen Patentanmeldung DE 38 28 098 A1, Seite 2, Zeile 27, bis Seite 4, Zeile 43, oder
- der europäischen Patentanmeldung EP 0 450 625 A1, Seite 2, Zeile 57, bis 5, Zeile 32,
bekannt.

Methodisch gesehen bietet die Modifizierung der Oberfläche der Nanopartikel keine Besonderheiten, sondern erfolgt nach den üblichen und bekannten Verfahren, die beispielsweise aus der internationalen Patentanmeldung WO 99/52964, Seite 10, Zeile 22, bis Seite 11, Zeile 17, und Beispiele 1 bis 20, Seite 14, Zeile 10, bis Seite 20 Zeile 24, oder aus der deutschen Patentanmeldung DE 197 26 829 A1, Beispiele 1 bis 6, Spalte 5, Zeile 63, bis Spalte 8, Zeile 38, bekannt sind. Vorzugsweise werden die dort angegebenen Mengenverhältnisse von Verbindungen I zu unmodifizierten Nanopartikeln angewandt.

Der Gehalt der erfindungsgemäß zu verwendenden Dispersion an den oberflächenmodifizierten, anorganischen Nanopartikeln (B) kann breit variieren und richtet sich nach den Erfordernissen des Einzelfalls. Vorzugsweise sind die Nanopartikel (B) in der erfindungsgemäß zu verwendenden Dispersion in einer Menge von, bezogen auf die Summe der wesentlichen Bestandteile (A), (B) und (C), 60 bis 98 Gew.-% enthalten.

Der weitere wesentliche Bestandteil der erfindungsgemäß zu verwendenden Dispersion ist mindestens ein Amphiphil (C).

Amphiphile sind bekanntermaßen Moleküle, die sowohl hydrophile als auch lipophile Eigenschaften haben (vgl. Römpp Chemie Lexikon, Georg Thieme Verlag, Stuttgart, New York, 9. Auflage, 1989, Band 1, Seite 176, »Amphiphil«).

Vorzugsweise werden die Amphiphile aus der Gruppe, bestehend aus Monoalkoholen, insbesondere Monoalkoholen mit 3 bis 6 Kohlenstoffatomen im Molekül, und aliphatischen Polyolen, insbesondere Diolen mit 3 bis 12 Kohlenstoffatomen im Molekül, ausgewählt.

Beispiel gut geeigneter Monoalkohole sind Propanol, Isopropanol, n-Butanol, Isobutanol, sec-Butanol, tert.-Butanol, Amylalkohol, Neopentylalkohol oder n-Hexanol.

Beispiele geeigneter Diole sind Propylenglykol, Trimethylenglykol, Butylenglykol, 1,5-Pentandiol, 1,6-Hexandiol und die stellungsisomeren Diethyloctandiole, wie sie beispielsweise aus der deutschen Patentanmeldung DE 198 09 643 A1 bekannt sind.

Besonders bevorzugt werden Propanol, Isopropanol, Butanol oder Isobutanol verwendet.

Der Gehalt der erfindungsgemäß zu verwendenden Dispersion an den Amphiphilen (C) kann sehr breit variieren und richtet sich nach den Erfordernissen des Einzelfalls. Vorzugsweise sind die Amphiphile (C) in den erfindungsgemäß zu verwendenden Dispersion in einer Menge von, bezogen auf die Summe der wesentlichen Bestandteile (A), (B) und (C), 1 bis 10 Gew.-% enthalten.

Außer den vorstehend beschriebenen wesentlichen Bestandteilen kann die erfindungsgemäß zu verwendende Dispersion noch weitere lackübliche Bestandteile enthalten.

Es ist indes ein ganz besonderer Vorteil der erfindungsgemäß zu verwendenden Dispersion, dass sie auch ohne Vernetzungsmittel oder Additive hervorragende Beschichtungen liefert.

Die Herstellung der erfindungsgemäß zu verwendenden Dispersion erfordert keine methodischen Besonderheiten, sondern erfolgt nach den üblichen und bekannten Methoden der Herstellung wässriger Dispersionen durch Vermischen der vorstehend beschriebenen Bestandteile in geeigneten Mischaggregaten wie Rührkessel, Dissolver, Ultraturrax, In-line-Dissolver, Rührwerksmühlen oder Extruder.

Die erfindungsgemäß zu verwendende Dispersion dient der Herstellung der erfindungsgemäßen Beschichtungen auf grundierten oder ungrundierten Substraten.

Als Substrate kommen alle zu lackierenden Oberflächen, die durch eine Härtung der hierauf befindlichen Lackierungen unter Anwendung von Hitze oder Hitze und aktinischer Strahlung nicht geschädigt werden, in Betracht. Geeignete Subtrate bestehen beispielsweise aus Metallen, Kunststoffen, Holz, Keramik, Stein, Textil, Faserverbunden, Leder, Glas, Glasfasern, Glas- und Steinwolle, mineral- und harzgebundenen Baustoffen, wie Gips- und Zementplatten oder Dachziegel, sowie Verbunden dieser Materialien. Die Oberflächen dieser Materialien können bereits vorlackiert oder vorbeschichtet sein.

Demgemäß ist die erfindungsgemäß zu verwendende Dispersion für das Lackieren von Kraftfahrzeugkarosserien und Teilen hiervon, Kraftfahrzeugen im Innen- und Außenbereich, Bauwerken im Innen- und Außenbereich, Türen, Fenstern und Möbeln sowie im Rahmen der industriellen Lackierung für das Lackieren von Kunststoffteilen, insbesondere transparenten Kunststoffteilen, Kleinteilen, Coils, Container, Emballagen, elektrotechnischen Bauteilen und weißer Ware sowie für das Beschichten von Hohlglasartikeln besonders gut geeignet.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Beschichtung können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) sowie deren Polymerblends oder die mit diesen Kunststoffen hergestellten faserverstärkten Kompositmaterialien lackiert werden.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Besondere Vorteile zeigen die erfindungsgemäß zu verwendende Dispersion und die erfindungsgemäßen Beschichtungen in der Automobilserien- und Reparaturlackierung als klare und transparente, hochkratzfeste, hochglänzende flexible, säure- und wasserbeständige, fest haftende, steinschlagfeste Klarlackierungen im Rahmen farb-und/oder effektgebender Mehrschichtlackierungen.

Die erfindungsgemäßen Mehrschichtlackierungen können in unterschiedlicher erfindungsgemäßer Weise hergestellt werden.

Bevorzugt werden die in der deutschen Patentanmeldung DE 199 30 664 A1, Seite 15, Zeile 36 bis 58, beschriebenen Nass-in-nass-Verfahren eingesetzt.

Es ist ganz besonderer Vorteil der aus der erfindungsgemäß zu verwendenden Dispersion hergestellten erfindungsgemäßen Beschichtungen, dass sie auch auf bereits ausgehärteten Elektrotauchlackierungen, Füllerlackierungen, Basislackierungen oder üblichen und bekannten Klarlackierungen hervorragend haften, so dass sie sich ausgezeichnet für die Autoreparaturlackierung oder die Kratzfestausrüstung von exponierten Stellen von lackierten Automobilkarosserien eignen.

Die Applikation der erfindungsgemäß zu verwendenden Dispersion kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Die Applikationen kann bei Temperaturen von max. 70 bis 80 °C durchgeführt werden, so dass geeignete Applikationsviskositäten erreicht werden, ohne dass bei der kurzzeitig einwirkenden thermischen Belastung eine Veränderung oder Schädigungen der erfindungsgemäß zu verwendenden Dispersion und ihres gegebenenfalls wiederaufzubereitenden Overspray eintreten. So kann das Heißspritzen so ausgestaltet sein, dass die erfindungsgemäß zu verwendende Dispersion nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. der erfindungsgemäß zu verwendenden Dispersion selbst, betrieben wird.

Von ganz besonderer Vorteil ist, dass die erfindungsgemäße Beschichtung durch Applikation eines geeigneten Beschichtungsstoffs, insbesondere der erfindungsgemäß zu verwendenden Dispersion, in einem Schritt appliziert werden kann und nicht aus mehreren diskreten Schichten aufgebaut werden muss.

Im allgemeinen werden die Elektrotauchlackschicht, Füllerlackschicht, Basislackschicht und Klarlackschicht in einer Nassschichtdicke appliziert, dass nach ihrer Aushärtung Schichten mit der für ihre Funktionen notwendigen und vorteilhaften Schichtdicken resultieren. Im Falle der Elektrotauchlackierung liegt diese Schichtdicke bei 10 bis 70, vorzugsweise 10 bis 60, besonders bevorzugt 15 bis 50 und insbesondere 15 bis 45 µm; im Falle der Füllerlackierung liegt sie bei 10 bis 150, vorzugsweise 10 bis 120, besonders bevorzugt 10 bis 100 und insbesondere 10 bis 90 µm; im Falle der Basislackierung liegt sie bei 5 bis 50, vorzugsweise 5 bis 40, besonders bevorzugt 5 bis 30 und insbesondere 10 bis 25 µm; und im Falle der erfindungsgemäßen Klarlackierungen liegt sie bei mindestens 30 bis 120, vorzugsweise mindestens 40 bis 100, besonders bevorzugt 50 bis 100 und insbesondere 60 bis 100 µm. Es kann aber auch der aus der europäischen Patentanmeldung EP 0 817 614 A1 bekannte Mehrschichtaufbau aus einer Elektrotauchlackierung, einer ersten Basislackierung, einer zweiten Basislackierung und einer erfindungsgemäßen Klarlackierung angewandt werden, worin die Gesamtschichtdicke der ersten und zweiten Basislackierung bei 15 bis 40 µm liegt und die Schichtdicke der ersten Basislackierung 20 bis 50% der besagten Gesamtschichtdicke beträgt.

Die Füllerlackschicht, Basislackschicht und erfindungsgemäße Klarlackschicht können thermisch oder thermisch und mit aktinischer Strahlung (Dual Cure) gehärtet werden.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10 g Wasser/kg Luft, insbesondere < 5 g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Besonders bevorzugt wird ein Verfahren angewandt, bei der der Bestandteil Wasser rasch aus den Nassschichten entfernt wird. Geeignete Verfahren dieser Art werden beispielsweise von Roger Talbert in Industrial Paint & Powder, 04/01, Seiten 30 bis 33, »Curing in Seconds with NIR«, oder in Galvanotechnik, Band 90 (11), Seiten 3098 bis 3100, »Lackiertechnik, NIR-Trocknung im Sekundentakt von Flüssig- und Pulvedacken«, beschrieben.

Vorteilhafterweise erfolgt die thermische Härtung bei einer Temperatur von 50 bis 200, besonders bevorzugt 60 bis 190 und insbesondere 80 bis 180 ° C während einer Zeit von 1 min bis zu 2 h, besonders bevorzugt 2 min bis zu 1 h und insbesondere 3 min bis 45 min.

Weiterhin wird die Härtung mit aktinischer Strahlung mit UV-Strahlung und/oder Elektronenstrahlen durchgeführt. Vorzugsweise wird hierbei eine Dosis von 1.000 bis 3.000, bevorzugt 1.100 bis 2.900, besonders bevorzugt 1.200 bis 2.800, ganz besonders bevorzugt 1.300 bis 2.700 und insbesondere 1.400 bis 2.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschichten gewährleistet werden. Auch im Falle der Härtung mit UV-Strahlung kann, um die Bildung von Ozon zu vermeiden, unter Inertgas oder einer sauerstoffabgereicherten Atmosphäre gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder -niederdruckdampflampen, welche gegebenenfalls mit Blei dotiert sind, um ein Strahlenfenster bis zu 405 nm zu öffnen, oder Elektronenstrahlquellen. Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben. Weitere Beispiele geeigneter Verfahren und Vorrichtungen zur Härtung mit aktinischer Strahlung werden in der deutschen Patentanmeldung DE 198 18 735 A1, Spalte 10, Zeilen 31 bis 61, beschrieben.

Bei kompliziert geformten Werkstücken, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlern, verbunden mit einer automatischen Bewegungseinrichtung für das Bestrahlen von Hohlräumen oder Kanten, (partiell) ausgehärtet werden.

Hierbei kann die Aushärtung stufenweise erfolgen, d. h. durch mehrfache Belichtung oder Bestrahlung mit aktinischer Strahlung. Dies kann auch alternierend erfolgen, d. h., dass abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Die erfindungsgemäßen Mehrschichtlackierungen weisen ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen die vom Markt geforderte hohe optische Qualität und Zwischenschichthaftung auf und werfen keine Probleme wie mangelnde Schwitzwasserbeständigkeit, Rissbildung (mudcracking) oder Verlaufsstörungen oder Oberflächenstrukturen in den erfindungsgemäßen Klarlackierungen auf.

Insbesondere weisen die erfindungsgemäßen Mehrschichtlackierungen einen hervorragenden Metallic-Effekt, einen hervorragenden D.O.I. (distinctiveness of the reflected image), eine ganz besonders hohe Kratzfestigkeit und eine hervorragende Oberflächenglätte auf.

Demzufolge weisen die erfindungsgemäßen grundierten oder ungrundierten Substrate, die mit mindestens einer erfindungsgemäßen Beschichtung beschichtet sind, bei einem besonders vorteilhaften anwendungstechnischen Eigenschaftsprofil eine besonders lange Gebrauchsdauer auf, was sie wirtschaftlich, ästhetisch und technisch besonders wertvoll macht.

### Beispiele

### Herstellbeispiel 1

### Die Herstellung eines Böhmit-Sols

2,78 Gewichtsteile Böhmit (Disperal ® P 3 der Firma Sasol Germany GmbH) wurden zu 25 Gewichtsteilen verdünnter Salzsäure (0,1 N) gegeben und bei Raumtemperatur solange gerührt, bis das Böhmit vollständig gelöst war. Anschließend wurde die kolloidale Lösung während 5 min in einem Ultraschallbad behandelt. Es resultierte ein homogenes Böhmit-Sol.

### Herstellbeispiel 2

### Die Herstellung einer Dispersion eines Copolymerisats (A)

In einem Reaktionsgefäß, ausgerüstet mit einem Rührer und 4 Zulaufgefäßen, wurden 1.361,1 Gewichtsteile deionisiertes Wasser vorgelegt und auf 40 °C erhitzt. Bei dieser Temperatur wurden aus dem ersten Zulaufgefäß eine Mischung aus 48,8 Gewichtsteilen Methoxypolyethylenglykolmethacrylat, 44 Gewichtsteilen Methylmethacrylat und 3,6 Gewichtsteilen 1,1-Diphenylethylen und aus dem zweiten Zulaufgefäß eine Lösung von 5,4 Gewichtsteilen Ammoniumperoxodisulfat in 138,7 Gewichtsteilen deionisiertem Wasser zur Vorlage zudosiert. Hiernach wurde das Reaktionsgemisch auf 90 °C erhitzt. Bei dieser Temperatur wurde während 4 h aus dem dritten Zulaufgefäß eine Mischung aus 246,7 Gewichtsteilen n-Butylmethacrylat, 198 Gewichtsteilen Styrol, 317,1 Gewichtsteilen Hydroxyethylmethacrylat und 222,8 Gewichtsteilen Ethylhexylmethacrylat zudosiert. Nach 2 h der Zudosierung wurden aus dem vierten Zulaufgefäß 51,8 Gewichtsteile Polyethylenglykol-400-dimethacrylat während der restlichen 2 h parallel zudosiert. Das resultierende Reaktionsgemisch wurde noch während 2 h bei 90 °C nachpolymerisiert und anschließend abgekühlt.

### Herstellbeispiel 3

### Die Herstellung einer Dispersion eines Copolymerisats (A)

In einem Reaktionsgefäß, ausgerüstet mit einem Rührer und 4 Zulaufgefäßen, wurden 1.361,1 Gewichtsteile deionisiertes Wasser vorgelegt und auf 75 °C erhitzt. Bei dieser Temperatur wurden drei Zuläufen parallel und gleichzeitig über einen Zeitraum von 30 min zudosiert. Zulauf 1 bestand aus 24,4 Gewichtsteilen Acrylsäure, 44 Gewichtsteilen Methylmethacrylat und 3,6 Gewichtsteilen Diphenylethylen. Zulauf 2 bestand aus einer 25-prozentige Ammoniaklösung. Zulauf 3 bestand aus eine Lösung von 5,4 Gewichtsteilen Ammoniumperoxodisulfat in 138,7 Gewichtsteilen deionisiertem Wasser. Nach der Zugabe wurde das resultierende Reaktionsgemisch noch während einer Stunde bei 75 °C nachpolymerisiert und anschließend auf 90 °C erhitzt. Bei dieser Temperatur wurde das Reaktionsgemisch während 4 h mit dem Zulauf 4 versetzt. Zulauf 4 bestand aus 191,7 Gewichtsteilen n-Butylmethyacrylat, 153,4 Gewichtsteilen Styrol, 93,3 Gewichtsteilen Hydroxypropylmethacrylat, 424,9 Gewichtsteilen Hydroxethylmethacrylat, 173,1 Gewichtsteilen Ethylhexylmethacrylat und 207,3 Gewichtsteilen einer 50-prozentigen Lösung von Tris(alkoxycarbonylamino)triazin (TACT ®) in n-Butanol. Anschließend wurde das Reaktionsgemisch noch weitere 2 h bei 90 °C nachpolymerisiert und anschließend abgekühlt.

### Beispiele 1 bis 5

### Die Herstellung von Beschichtungsstoffen und Beschichtungen

### Beispiel 1:

Zu 5,5 Gewichtsteilen des Böhmit-Sols gemäß Herstellbeispiel 1 wurden 3,3 Gewichtsteile GLYEO gegeben. Das so erhaltene Reaktionsgemisch wurde während 90 min bei Raumtemperatur gerührt. Anschließend wurden 2,2 Gewichtsteile Glycidyloxipropyltrimethoxysilan (GLYMO) zu gegeben. Nach zweistündigem Rühren bei Raumtemperatur wurden 0,55 Gewichtsteile Acetessigsäureethylester (EEA) hinzugegeben, wonach das resultierende Reaktionsgemisch weitere 2 h bei Raumtemperatur gerührt wurde. Anschließend wurden 0,75 Gewichtsteilen Isopropanol zugegeben. Das resultierende Reaktionsgemisch wurde während 15 min gerührt, mit 1,25 Gewichtsteilen der Dispersion des Copolymerisats (A) gemäß Herstellbeispiel 4 versetzt und weitere 2 h bei Raumtemperatur gerührt.

### Beispiele 2 bis 5:

Die Beschichtungsstoffe der Beispiele 2 bis 5 wurden analog dem Beschichtungsstoff des Beispiels 1 hergestellt. Dabei wurden die in der Tabelle 1 angegebenen Ausgangsprodukte in den angegebenen Mengen verwendet. Zum Vergleich sind die Ausgangsprodukte und die Mengen gemäß Beispiel 1 aufgeführt.

**Tabelle 1: Die Herstellung der Beschichtungsstoffe der Beispiele 1 bis 5**

| **Ausgangsprodukte** | **Beispiele:** | | | | |
|---|---|---|---|---|---|
| | **1** | **2** | **3** | **4** | **5** |
| Böhmit-Sol gemäß Herstellbeispiel 1 | 5,5 | 8,5 | 8,5 | 9,35 | 5,5 |
| GLYMO | 2,2 | 1,1 | 1,1 | 1,21 | 2,2 |
| GLYEO | 3,3 | 1,7 | 1,7 | 1,87 | 3,3 |
| EEA | 0,55 | 0,55 | 0,55 | 0,28 | 0,55 |
| Isopropanol | 1,25 | 1,25 | 2 | 2 | - |
| Dispersion gemäß Herstellbeispiel 2 | 1,25 | 1,25 | 2 | 2 | - |
| Dispersion gemäß Herstellbeispiel 3 | - | - | - | - | 1,25 |

Die Beschichtungsstoffe der Beispiele 1 bis 5 wurden auf Substrate aus Floatglas mit Hilfe einer Rakel appliziert. Die resultierenden Schichten wurden während 22 min bei 140 °C gehärtet. Die Trockenschichtdicken finden sich in der Tabelle 2.

Die Beschichtungen der Beispiele 1 bis 5 waren völlig klar und transparent. Sie wiesen keine Spannungsrisse und andere Oberflächendefekte auf.

### Beispiel 6

### Mechanisch dynamische Eigenschaften und Kratzfestigkeit sowie die Haftungseigenschaften der Beschichtungen der Beispiele 1 bis 5

Die Universalhärte in N/mm² bei 25,6, 10 und 5 mN, die mittlere Eindringtiefe in µm und die relative elastische Tiefenrückfederung in % wurden nach DIN 55676 mit Hilfe eines Fischerscope ® H100C der Firma Helmut Fischer GmbH gemessen, wobei die Kraft an die Schichtdicke und die mechanischen Eigenschaften der Beschichtungen angepasst wurde, damit die Eindringtiefe nicht mehr als 10% der Schichtdicke betrug.

Die Haftungseigenschaften wurden im Gitterschnitttest mit Tesabandabriss nach DIN ISO 2409 bestimmt.

Zur Durchführung des Stahlwolle-Kratztests wurde ein Hammer nach DIN 1041 (Gewicht ohne Stiel: 800 g; Stiellänge: 35 cm) verwendet. Die Prüftafeln wurden vor dem Test während 24 h bei Raumtemperatur gelagert.

Die flache Hammerseite wurde mit einer Lage Stahlwolle Nr. 00 der Firma Oscar Weil GmbH, Lahr, bespannt und mit Tesakrepp an den hochgeschlagenen Seiten befestigt. Der Hammer wurde im rechten Winkel auf die Klarlackierungen aufgesetzt. Das Gewichtsstück des Hammers wurde ohne zu verkannten und ohne zusätzliche Körperkraft in einer Spur über die Oberfläche der Klarlackierungen geführt.

Bei jeder Prüfung wurden 10 Doppelhübe in einer Zeit von etwa 15 s ausgeführt. Nach jeder zehnten Einzelprüfung wurde die Stahlwolle ausgetauscht.

Nach der Belastung wurden die Prüfflächen mit einem weichen Tuch von den Stahlwolleresten gereinigt. Die Prüfflächen wurden visuell unter Kunstlicht ausgewertet und wie folgt benotet:

### Note Schädigungsbild

- 1: nicht vorhanden
- 2: gering
- 3: mäßig
- 4: mäßig bis mittel
- 5: stark
- 6: sehr stark

Die Auswertung erfolgte unmittelbar nach Versuchsende.

Die Ergebnisse finden sich in der Tabelle 2. Sie untermauern, dass die Beschichtungen eine hervorragende Kratzfestigkeit aufwiesen, obwohl sie vergleichsweise weich waren.

**Tabelle 2: Mechanisch dynamische Eigenschaften und Kratzfestigkeit sowie Haftungseigenschaften der Beschichtungen der Beispiele 1 bis 5**

| **Eigenschaften** | **Beispiele:** | | | | |
|---|---|---|---|---|---|
| | **1** | **2** | **3** | **4** | **5** |
| Trockenschichtdicke [µm] | 44 | 44 | 45 | 41 | 40 |
| Universalhärte [Nmm2] | 19,7 | 29,6 | 29,9 | 29,32 | 2,8 |
| mittlere Eindringtiefe [µm] | 4,3 | 3,6 | 3,6 | 3,2 | 4,0 |
| relative elastische Tiefenrückfederung [%] | 90 | 84,7 | 80,9 | 80,4 | 82,5 |
| Haftung im Gitterschnitttest GT/TT | 0/0 | 0/0 | 0/0 | 0/0 | 0/0 |
| Kratzfestigkeit im Steinwolletest (Note) | 1 | 1 | 1 | 1 | 1 |

## Patentansprüche

1. Transparente Beschichtungen einer Schichtdicke von mindestens 30-µm, einer relativen elastischen Tiefenrückfederung nach DIN 55676 von mindestens 70% und einer Kratzfestigkeit, entsprechend einer Note von höchstens 2 im Stahlwollekratztest nach DIN 1041 nach 10 Doppelhüben.

2. Beschichtungen nach Anspruch 1, **dadurch gekennzeichnet, dass** sie eine elastische Tiefenrückfederung von mindestens 74% haben.

3. Beschichtungen nach Anspruch 1 oder 2, **dadurch gekennzeichnet, dass** sie eine elastischen Tiefenrückfederung von mindestens 78% haben.

4. Beschichtungen nach einem der Ansprüche 1 bis 3, **dadurch gekennzeichnet, dass** sie eine Schichtdicke von mindestens 40 µm aufweisen.

5. Beschichtungen nach einem der Ansprüche 1 bis 4, **dadurch gekennzeichnet, dass** sie eine Transmission > 90% für Licht einer Wellenlänge zwischen 400 und 700 nm haben.

6. Beschichtungen nach einem der Ansprüche 1 bis 5, **dadurch gekennzeichnet, dass** sie auf entfettetem Floatglas und entfettetem Edelstahl 1.4301 eine Haftung gemäß DIN ISO 2409 von GT/TT 0/0 haben.

7. Beschichtungen nach einem der Ansprüche 1 bis 6, **dadurch gekennzeichnet, dass** sie auf pigmentierten Basislackierungen eine Haftung gem. DIN ISO 2409 von GT/TT 0/0 haben.

8. Beschichtungen nach einem der Ansprüche 1 bis 7, **dadurch gekennzeichnet, dass** sie duroplastisch sind.

9. Beschichtungen nach Anspruch 8, **dadurch gekennzeichnet, dass** sie aus einem härtbaren Beschichtungsstoff herstellbar sind.

10. Beschichtungen nach Anspruch 9, **dadurch gekennzeichnet, dass** der Beschichtungsstoff thermisch härtbar ist.

11. Beschichtungen nach Anspruch 9 oder 10, **dadurch gekennzeichnet, dass** der härtbare Beschichtungsstoff aus anorganischen und organischen Bestandteilen besteht.

12. Beschichtungen nach Anspruch 11, **dadurch gekennzeichnet, dass** der härtbare Beschichtungsstoff einen Glührückstand von mindestens 10 Gew.-% hat.

13. Beschichtungen nach einem der Ansprüche 1 bis 12, **dadurch gekennzeichnet, dass** sie eine wässrige Dispersion eines pH-Wertes von 2 bis 7, enthaltend
(A) mindestens ein quellbares Polymer oder Oligomer mit anionischen und/oder potenziell anionischen und/oder nicht-ionischen hydrophilen funktionellen Gruppen,
(B) oberflächenmodifizierte, kationisch stabilisierte, anorganische Nanopartikel mindestens einer Art und
(C) mindestens ein Amphiphil, enthalten oder hieraus bestehen.

14. Beschichtungen nach Anspruch 13, **dadurch gekennzeichnet, dass** die wässrige Dispersion, bezogen auf ihre Gesamtmenge, einen Festkörper von bis zu 60 Gew.-% aufweist.

15. Beschichtungen nach Anspruch 13 oder 14, **dadurch gekennzeichnet, dass** die wässrige Dispersion, bezogen auf die Summe (A) + (B) + (C),
- 1 bis 30 Gew.-% (A),
- 60 bis 98 Gew.-% (B) und
- 1 bis 10 Gew.-% (C)
enthält.

16. Beschichtungen nach einem der Ansprüche 13 bis 15 anderen, **dadurch gekennzeichnet, dass** die Polymeren und Oligomeren (A) aus der Gruppe, bestehend aus anionischen und/oder potenziell anionischen funktionellen Gruppen enthaltenden Polymeren und Oligomeren, die bei pH-Werten von 2 bis 7 eine elektrophoretische Mobilität ≤ -0,5 (µm/s)/(V/cm) aufweisen, ausgewählt werden.

17. Beschichtungen nach einem der Ansprüche 13 bis 16, **dadurch gekennzeichnet, dass** die anorganischen Nanopartikel (B) aus der Gruppe, bestehend aus Haupt- und Nebengruppen-Metallen und deren Verbindungen, ausgewählt werden.

18. Beschichtungen nach einem der Ansprüche 13 bis 17, **dadurch gekennzeichnet, dass** die Amphiphile (C) aus der Gruppe, bestehend aus Monoalkoholen und aliphatischen Polyolen, ausgewählt werden.

19. Verfahren zur Herstellung von Beschichtungen gemäß einem der Ansprüche 1 bis 18 durch Applikation eines Beschichtungsstoffs auf ein Substrat oder auf eine hierauf befindliche ungehärtete, partiell gehärtete oder gehärtete Schicht, **dadurch gekennzeichnet, dass** man hierbei
(1) einen Beschichtungsstoff auswählt, der nach seiner Verfestigung oder Härtung eine elastische Tiefenrückfederung nach DIN 55676 von mindestens 70% und eine Kratzfestigkeit, entsprechend einer Note von höchstens 2 im Stahlwollekratztest nach DIN 1041 nach 10 Doppelhüben, aufweist und
(2) den Beschichtungsstoff (1) in einem Schritt appliziert.

20. Verfahren nach Anspruch 19, **dadurch gekennzeichnet, dass** man den Beschichtungsstoff durch Spritzen appliziert.

21. Verwendung der Beschichtungen gemäß einem der Ansprüche 1 bis 18 und der nach dem Verfahren gemäß Anspruch 19 oder 20 hergestellten Beschichtungen für den Schutz von Oberflächen von Substraten vor der Beschädigung durch mechanische Einwirkung und/oder zu ihrer Dekoration.

22. Verwendung nach Anspruch 21, **dadurch gekennzeichnet, dass** es sich bei den Substraten um Kraftfahrzeuge oder Teile hiervon, Bauwerke, Möbel, Fenster und Türen, industrielle Kleinteile, Coils, Container, Emballagen, elektrotechnische Bauteile, weiße Ware, Folien sowie Glashohlkörper handelt.

## Claims

1. Transparent coatings with a thickness of at least 30 µm, a relative elastic resilience to DIN 55676 of at least 70%, and a scratch resistance corresponding to a score of not more than 2 in the steel wool scratch test to DIN 1041 after 10 double strokes.

2. Coatings according to Claim 1, **characterized in that** they have an elastic resilience of at least 74%.

3. Coatings according to Claim 1 or 2, **characterized in that** they have an elastic resilience of at least 78%.

4. Coatings according to any of Claims 1 to 3, **characterized in that** they have a thickness of at least 40 µm.

5. Coatings according to any of Claims 1 to 4, **characterized in that** they have a transmission > 90% for light with a wavelength of between 400 and 700 nm.

6. Coatings according to any of Claims 1 to 5, **characterized in that** they have an adhesion in accordance with DIN ISO 2409 to degreased float glass and degreased stainless steel 1.4301 of GT/TT 0/0.

7. Coatings according to any of Claims 1 to 6, **characterized in that** they have on pigmented basecoats an adhesion to DIN ISO 2409 of GT/TT 0/0.

8. Coatings according to any of Claims 1 to 7, **characterized in that** they are thermosetting.

9. Coatings according to Claim 8, **characterized in that** they are preparable from a curable coating material.

10. Coatings according to Claim 9, **characterized in that** the coating material is thermally curable.

11. Coatings according to Claim 9 or 10, **characterized in that** the curable coating material is composed of organic and inorganic constituents.

12. Coatings according to Claim 11, **characterized in that** the curable coating material has an ignition residue of at least 10% by weight.

13. Coatings according to any of Claims 1 to 12, **characterized in that** they comprise or consist of an aqueous dispersion with a pH of from 2 to 7 comprising
(A) at least one swellable polymer or oligomer containing anionic and/or potentially anionic and/or nonionic hydrophilic functional groups,
(B) surface-modified, cationically stabilized inorganic nanoparticles of at least one kind, and
(C) at least one amphiphile.

14. Coatings according to Claim 13, **characterized in that** the aqueous dispersion, based on its total amount, has a solids content of up to 60% by weight.

15. Coatings according to Claim 13 or 14, **characterized in that** the aqueous dispersion, based on the sum (A) + (B) + (C), contains
- from 1 to 30% by weight of (A),
- from 60 to 98% by weight of (B), and
- from 1 to 10% by weight of (C).

16. Coatings according to any of Claims 13 to 15, **characterized in that** the polymers and oligomers (A) are selected from the group consisting of polymers and oligomers which contain anionic and/or potentially anionic functional groups and which, at a pH of from 2 to 7, have an electrophoretic mobility≤ -0.5 (µm/s)/(V/cm).

17. Coatings according to any of Claims 13 to 16, **characterized in that** the inorganic nanoparticles (B) are selected from the group consisting of main group metals, transition group metals, and their compounds.

18. Coatings according to any of Claims 13 to 17, **characterized in that** the amphiphiles (C) are selected from the group consisting of monoalcohols and aliphatic polyols.

19. Process for producing coatings according to any of Claims 1 to 18 by applying a coating material to a substrate or to an uncured, part-cured or cured film present thereon, **characterized in that** it comprises
(1) selecting a coating material which following its solidification or curing has an elastic resilience to DIN 55676 of at least 70% and a scratch resistance corresponding to a score of not more than 2 in the steel wool scratching test to DIN 1041 after 10 double strokes, and
(2) applying the coating material (1) in one step.

20. Process according to Claim 19, **characterized in that** the coating material is applied by spraying.

21. Use of the coatings according to any of Claims 1 to 18 or of the coatings produced by the process according to Claim 19 or 20 for protecting surfaces of substrates against damage by mechanical exposure and/or for their decoration.

22. Use according to Claim 21, **characterized in that** the substrates are motor vehicles or parts thereof, buildings, furniture, windows, and doors, small industrial parts, coils, containers, packaging, electrical components, white goods, films, or hollow glassware.

## Revendications

1. Revêtements transparents ayant une épaisseur de couche d'au moins 30 µm, un retour élastique en profondeur relatif selon la norme DIN 55676 d'au moins 70 % et une résistance aux rayures, correspondant à une note d'au maximum 2 lors de l'essai de rayures à la laine d'acier selon la norme DIN 1041, à l'issue de 10 courses doubles.

2. Revêtements selon la revendication 1, **caractérisés en ce qu'**ils possèdent un retour élastique en profondeur d'au moins 74 %.

3. Revêtements selon la revendication 1 ou 2,
**caractérisés en ce qu'**ils possèdent un retour élastique en profondeur d'au moins 78 %.

4. Revêtements selon l'une quelconque des revendications 1 à 3, **caractérisés en ce qu'**ils présentent une épaisseur de couche d'au moins 40 µm.

5. Revêtements selon l'une quelconque des revendications 1 à 4, **caractérisés en ce qu'**ils possèdent une transmission supérieure à 90 % pour la lumière d'une longueur d'onde comprise entre 400 et 700 nm.

6. Revêtements selon l'une quelconque des revendications 1 à 5, **caractérisés en ce qu'**ils présentent une adhérence, selon la norme DIN ISO 2409, de GT/TT 0/0 sur du verre flotté dégraissé et de l'acier fin dégraissé de type 1.4301.

7. Revêtements selon l'une quelconque des revendications 1 à 6, **caractérisés en ce qu'**ils présentent une adhérence, selon la norme DIN ISO 2409, de GT/TT 0/0 sur des vernis de base pigmentés.

8. Revêtements selon l'une quelconque des revendications 1 à 7, **caractérisés en ce qu'**ils sont duroplastiques.

9. Revêtements selon la revendication 8, **caractérisés en ce qu'**ils peuvent être fabriqués à partir d'une substance de revêtement durcissable.

10. Revêtements selon la revendication 9, **caractérisés en ce que** la substance de revêtement est thermodurcissable.

11. Revêtements selon la revendication 9 ou 10,
**caractérisés en ce que** la substance de revêtement durcissable est constituée de composants inorganiques et organiques.

12. Revêtements selon la revendication 11, **caractérisés en ce que** la substance de revêtement durcissable a un résidu sec d'au moins 10 % en poids.

13. Revêtements selon l'une quelconque des revendications 1 à 12, **caractérisés en ce qu'**ils contiennent une dispersion aqueuse d'une valeur de pH de 2 à 7, contenant :
(A) au moins un polymère ou un oligomère gonflant avec des groupements fonctionnels hydrophiles anioniques et/ou potentiellement anioniques et/ou non ioniques,
(B) des nanoparticules inorganiques, modifiées en surface et stabilisées cationiquement d'au moins un type, et
(C) au moins un composé amphiphile,
ou **en ce qu'**ils en sont constitués.

14. Revêtements selon la revendication 13, **caractérisés en ce que** la dispersion aqueuse, par rapport à sa quantité totale, présente un corps solide au maximum de 60 % en poids.

15. Revêtements selon la revendication 13 ou 14,
**caractérisés en ce que** la dispersion aqueuse, par rapport à la somme de (A) + (B) + (C), contient :
- 1 à 30 % en poids de (A),
- 60 à 98 % en poids de (B), et
- 1 à 10 % en poids de (C).

16. Revêtements selon l'une quelconque des revendications 13 à 15, **caractérisés en ce que** l'on choisit les polymères et des oligomères (A) dans le groupe constitué de polymères et d'oligomères contenant des groupements fonctionnels anioniques et/ou potentiellement anioniques qui présentent, à des valeurs de pH de 2 à 7, une mobilité électrophorétique inférieure ou égale à -0,5 (µm/s) / (V/cm) .

17. Revêtements selon l'une quelconque des revendications 13 à 16, **caractérisés en ce que** l'on choisit les nanoparticules inorganiques (B) dans le groupe constitué de métaux de groupes principaux et secondaires et de leurs composés.

18. Revêtements selon l'une quelconque des revendications 13 à 17, **caractérisés en ce que** l'on choisit les composés amphiphiles (C) dans le groupe constitué des monoalcools et des polyols aliphatiques.

19. Procédé de fabrication de revêtements selon l'une quelconque des revendications 1 à 18 par application d'une substance de revêtement sur un substrat ou sur une couche non durcie, partiellement durcie ou durcie, se trouvant au-dessus, **caractérisé en ce que**, en l'occurrence :
(1) on choisit une substance de revêtement qui présente, après sa consolidation ou son durcissement, un retour élastique en profondeur selon la norme DIN 55676 d'au moins 70 % et une résistance aux rayures, correspondant à une note au maximum de 2 lors de l'essai de rayures à la laine d'acier selon la norme DIN 1041, à l'issue de 10 courses doubles, et
(2) on applique la substance de revêtement (1) en une étape.

20. Procédé selon la revendication 19, **caractérisé en ce que** l'on applique la substance de revêtement par pulvérisation.

21. Utilisation des revêtements selon l'une quelconque des revendications 1 à 18 et des revêtements fabriqués d'après le procédé selon la revendication 19 ou 20, pour la protection de surfaces de substrats contre une détérioration par un effet mécanique et/ou pour leur décoration.

22. Utilisation selon la revendication 21, **caractérisée en ce que** les substrats dont il s'agit sont des véhicules automobiles ou des parties de ceux-ci, des ouvrages de construction, des meubles, des fenêtres et des portes, des petites pièces industrielles, des bobines, des conteneurs, des emballages, des composants électrotechniques, des produits blancs, des films ainsi que des corps creux en verre.
